# EUROPÄISCHE PATENTSCHRIFT

(11) **EP 3 486 144 B1**
(45) Veröffentlichungstag und Bekanntmachung des Hinweises auf die Patenterteilung: **19.01.2022**
(21) Anmeldenummer: 17201944.0
(22) Anmeldetag: 15.11.2017
(51) Int. Cl.: B62D 25/00, B62D 29/00

(54) **SYSTEM EINES VERSTÄRKTEN STRUKTURELEMENTES EINES KRAFTFAHRZEUGES**
SYSTEM OF A REINFORCED STRUCTURAL ELEMENT OF A MOTOR VEHICLE
SYSTÈME D'UN ÉLÉMENT STRUCTURAL RENFORCÉ D'UN VÉHICULE AUTOMOBILE

(43) Veröffentlichungstag der Anmeldung: 22.05.2019
(73) Patentinhaber: SIKA TECHNOLOGY AG, 6340 Baar (CH)
(72) Erfinder: Belpaire, Vincent, 1180 Uccle (BE); Shehu, Ardi, 3111 Rotselaar (BE)
(74) Vertreter: Sika Patent Attorneys

(56) Entgegenhaltungen:
- DE-A1-102007 025 930
- DE-A1-102011 117 951

## Beschreibung

Die Erfindung betrifft ein System eines verstärkten Strukturelementes. Insbesondere betrifft die Erfindung ein System eines verstärkten Strukturelementes für ein Kraftfahrzeug.

Vielfach weisen Bauelemente, wie beispielsweise Karosserien und/oder Rahmen von Transport- und Fortbewegungsmitteln, insbesondere von Fahrzeugen zu Wasser oder zu Land oder von Luftfahrzeugen, Strukturen mit Hohlräumen auf, um leichtgewichtige Konstruktionen zu ermöglichen. Diese Hohlräume verursachen jedoch verschiedenste Probleme. Je nach Art des Hohlraumes muss dieser zum Verhindern des Eindringens von Feuchtigkeit und Verschmutzungen, die zur Korrosion der Bauelemente führen können, abgedichtet werden. Oft ist es auch wünschenswert, die Hohlräume und somit das Bauelement wesentlich zu verstärken, jedoch das geringe Gewicht beizubehalten. Oft ist es auch notwendig, die Hohlräume und somit die Bauelemente zu stabilisieren, um Geräusche, die sonst den Hohlraum entlang oder durch diesen hindurch übertragen werden würden, zu reduzieren. Viele dieser Hohlräume weisen eine unregelmässige Form oder ein enges Ausmass auf, wodurch es erschwert wird, sie richtig abzudichten, zu verstärken und zu dämpfen.

DE 10 2011 117951 A1 offenbart ein System eines verstärkten Strukturelementes eines Kraftfahrzeuges umfassend ein Strukturelement, welches ein erstes Blech und ein zweites Blech umfasst, wobei die Bleche an einer ersten Fügstelle und an einer zweiten Fügstelle miteinander verbunden sind, und wobei die Bleche im Bereich zwischen der ersten Fügstelle und der zweiten Fügstelle einen länglichen Hohlraum bilden.

Insbesondere im Automobilbau, aber auch im Flugzeug- und Bootsbau, werden deshalb Abdichtungselemente (englisch: baffle) verwendet, um Hohlräume abzudichten und/oder akustisch abzuschotten, oder Verstärkungselemente (englisch: reinforcer) verwendet, um Hohlräume zu verstärken.

In Fig. la ist eine Karosserie eines Automobils schematisch dargestellt. Die Karosserie 10 weist dabei verschiedene Strukturen mit Hohlräumen, wie beispielsweise Säulen 14 und Träger bzw. Verstrebungen 12, auf. Solche Strukturelemente 12, 14 mit Hohlräumen werden üblicherweise mit Abdichtungs- und/oder Verstärkungselementen 16 abgedichtet bzw. verstärkt.

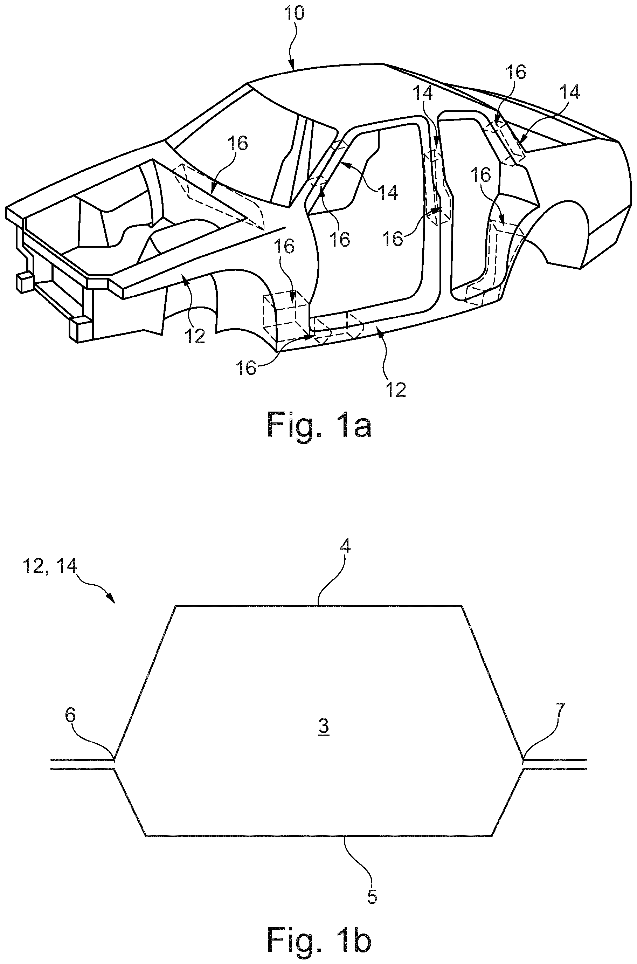

In Fig. 1b ist schematisch ein Querschnitt durch ein Strukturelement 12, 14 dargestellt. Oftmals sind bei solchen Strukturelementen 12, 14 ein erstes Blech 4 und ein zweites Blech 5 an Fügestellen 6, 7 zusammengefügt, wobei die Bleche 4, 5 zwischen den Fügestellen 6, 7 einen Hohlraum 3 ausbilden.

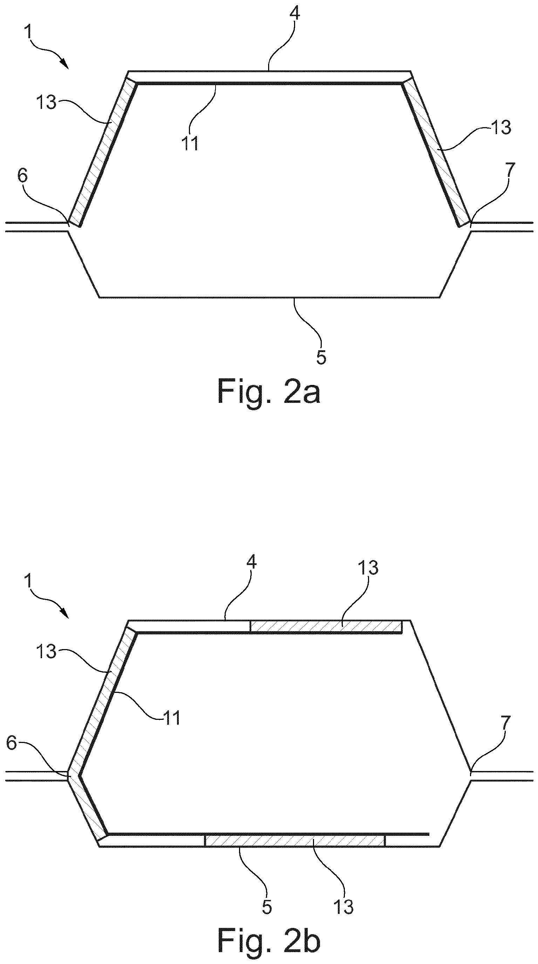

In den Fig. 2a und 2b sind bekannte Konzepte dargestellt, wie solche Strukturelemente 12, 14 verstärkt werden können. Somit ist in den Fig. 2a und 2b jeweils ein System 1 eines verstärkten Strukturelementes 12, 14 dargestellt. Dabei ist jeweils ein Verstärkungselement 11 im Hohlraum des Strukturelementes 12, 14 angeordnet. Das Verstärkungselement 11 ist dabei durch eine Klebstoffschicht 13 mit dem Strukturelement 12, 14 bzw. mit den Blechen 4, 5 verbunden.

Die Verstärkungselemente 11 weisen üblicherweise einen Querschnitt auf, wie in den Fig. 2a und 2b dargestellt ist. Da die Verstärkungselemente 11 oftmals im Spritzgussverfahren hergestellt werden, ist es üblich, dass die Querschnitte offen gehalten sind, das heisst, dass die Verstärkungselemente von der Spritzgussform abgezogen werden können. Durch diese offene Form der Querschnitte der Verstärkungselemente 11 sind jedoch Kompromisse bei der Anbindung des Verstärkungselementes 11 an die Bleche 4, 5 notwendig. So ist es beispielsweise nicht möglich, das Verstärkungselement entlang seines gesamten Umfanges mit dem Strukturelement 12, 14 zu verkleben.

Dies wirkt sich nachteilig auf die Eigenschaften des verstärkten Strukturelementes aus. Insbesondere bei sehr hohen Lastfällen, wie sie beispielsweise bei crashrelevanten Bauteilen auftreten, ist eine bestmögliche Anbindung des Verstärkungselementes 11 an das Strukturelement wünschenswert.

Der Erfindung liegt daher die Aufgabe zugrunde, ein verbessertes System eines verstärkten Strukturelementes eines Kraftfahrzeuges zur Verfügung zu stellen, welches eine verbesserte Anbindung des Verstärkungselementes an das Strukturelement erlaubt. Dabei sollen insbesondere Anforderungen, wie sie bei Bauteilen mit besonders hohen Lastfällen auftreten, besser erfüllt werden können.

Diese Aufgabe wird gelöst durch ein System eines verstärkten Strukturelementes eines Kraftfahrzeuges, wobei das System umfasst: ein Strukturelement, welches ein erstes Blech und ein zweites Blech umfasst, wobei die Bleche an einer ersten Fügestelle und an einer zweiten Fügestelle miteinander verbunden sind, und wobei die Bleche im Bereich zwischen der ersten Fügestelle und der zweiten Fügestelle einen länglichen Hohlraum bilden; ein Verstärkungselement, welches eine erste Seitenwand, eine zweite Seitenwand und eine die Seitenwände verbindende Verbindungswand umfasst, und welches im Hohlraum des Strukturelementes angeordnet ist; und Klebstoff, welcher das Verstärkungselement mit dem Strukturelement verklebt; wobei die erste Seitenwand des Verstärkungselementes im Bereich der ersten Fügestelle angeordnet ist und die zweite Seitenwand des Verstärkungselementes im Bereich der zweiten Fügestelle angeordnet ist, so dass die erste Seitenwand mit dem ersten Blech und mit dem zweiten Blech verklebt ist und so dass die zweite Seitenwand ebenfalls mit dem ersten Blech und dem zweiten Blech verklebt ist.

Diese Lösung bietet den Vorteil, dass durch die Verklebung der Seitenwände mit jeweils dem ersten Blech und dem zweiten Blech eine markant verbesserte Verstärkung des Strukturelementes erreichbar ist. Dadurch werden nämlich nicht nur die Verklebungsflächen zwischen dem Verstärkungselement und dem Strukturelement vergrössert, sondern es werden auch die Bleche durch das Verstärkungselement und den Klebstoff zusätzlich miteinander verklebt. Dies verstärkt die Gesamtheit des Strukturelementes wesentlich.

Ein Kerngedanke der vorliegenden Erfindung ist es, dass insbesondere die Bereiche der Fügestellen zwischen den Blechen durch das Verstärkungselement verstärkt werden sollen, um eine Gesamteigenschaft des Systems hinsichtlich einer mechanischen Belastbarkeit verbessern zu können. Insbesondere durch das direkte Verstärken beider Fügestellen wird das Strukturelement auf effiziente Weise durch das Verstärkungselement verstärkt.

In einer beispielhaften Ausführungsform umfasst die erste Seitenwand eine erste Teilwand und eine zweite Teilwand, wobei die zweite Seitenwand ebenfalls eine erste Teilwand und eine zweite Teilwand umfasst, und wobei die erste Teilwand der ersten Seitenwand und die erste Teilwand der zweiten Seitenwand mit dem ersten Blech verklebt sind, und wobei die zweite Teilwand der ersten Seitenwand und die zweite Teilwand der zweiten Seitenwand mit dem zweiten Blech verklebt sind.

Diese Lösung hat den Vorteil, dass dadurch jeweils eine Seitenwand aufgeteilt wird in eine erste Teilwand und eine zweite Teilwand, wobei die Teilwände jeweils an unterschiedlichen Blechen verklebt sind. Insbesondere bei Hohlräumen, bei denen die Bleche bei der Fügestelle nicht in einer durchgehenden Ebene liegen, ist das Vorsehen von Teilwänden in den Seitenwänden vorteilhaft, um eine möglichst gute Anbindung des Verstärkungselementes im Bereich der Fügestellen zu gewährleisten.

In einer beispielhaften Ausführungsform ist das erste Blech mit der ersten Seitenwand und mit der zweiten Seitenwand jeweils über zumindest 10 mm verklebt, gemessen von der ersten Fügestelle bzw. von der zweiten Fügestelle aus und orthogonal zu einer Längsachse des Verstärkungselementes.

In einer beispielhaften Ausführungsform ist das zweite Blech mit der ersten Seitenwand und mit der zweiten Seitenwand jeweils über zumindest 10 mm verklebt, gemessen von der ersten Fügestelle bzw. von der zweiten Fügestelle aus und orthogonal zu einer Längsachse des Verstärkungselementes.

Das Vorsehen von Verklebungen über zumindest 10 mm hat den Vorteil, dass dadurch grössere Flächen des Verstärkungselementes und des Strukturelementes miteinander verklebt werden. Dadurch kann eine bessere Verstärkung des Strukturelementes durch das Verstärkungselement erreicht werden.

In einer beispielhaften Weiterbildung messen die Verklebungen jeweils zumindest 15 mm, zumindest 20 mm, oder zumindest 25 mm.

In einer beispielhaften Ausführungsform sind die erste Seitenwand und die zweite Seitenwand jeweils über ihre gesamte Breite, gemessen orthogonal zur Längsrichtung des Verstärkungselementes, mit dem ersten Blech und mit dem zweiten Blech verklebt.

Dies hat den Vorteil, dass dadurch eine maximale Verklebungsfläche der Seitenwände des Verstärkungselementes genutzt wird, um mit dem Strukturelement verbunden zu werden.

In einer beispielhaften Ausführungsform umfasst die Verbindungswand eine erste Teilwand und eine zweite Teilwand, wobei die erste Teilwand und die zweite Teilwand jeweils die erste Seitenwand und die zweite Seitenwand miteinander verbinden.

Das Vorsehen von zwei Verbindungswänden bietet den Vorteil, dass dadurch verbesserte mechanische Eigenschaften des Verstärkungselementes an sich erzielt werden können. Ein weiterer Vorteil besteht darin, dass durch das Vorsehen von zwei Verbindungswänden grundsätzlich eine grössere Oberfläche des Verstärkungselementes zur Verfügung gestellt wird, welche mit dem Strukturelement verklebt werden kann.

In einer beispielhaften Ausführungsform ist die erste Teilwand der Verbindungswand zumindest teilweise mit dem ersten Blech verklebt, und die zweite Teilwand der Verbindungswand ist zumindest teilweise mit dem zweiten Blech verklebt.

Das zumindest teilweise Verkleben der Verbindungswände mit dem Strukturelement bietet den Vorteil, dass dadurch eine weitere Verbesserung der Anbindung des Verstärkungselementes an das Strukturelement erreicht werden kann.

In einer beispielhaften Ausführungsform verbindet die Verbindungswand die erste Seitenwand und die zweite Seitenwand derart miteinander, dass die Verbindungswand im Wesentlichen diagonal im Strukturelement angeordnet ist.

Das Vorsehen einer solchen diagonalen Verbindungswand hat den Vorteil, dass dadurch das Verstärkungselement grundsätzlich leichter ausgestaltet werden kann.

In einer beispielhaften Ausführungsform ist die Verbindungswand des Verstärkungselementes zumindest teilweise frei von Klebstoff.

In einer beispielhaften Ausführungsform ist der Klebstoff auf der ersten Seitenwand nicht verbunden mit dem Klebstoff auf der zweiten Seitenwand.

In einer beispielhaften Ausführungsform ist das Verstärkungselement zumindest teilweise aus faserverstärktem Kunststoff oder aus Kunststoff oder aus Aluminium oder aus Magnesium aufgebaut.

In einer beispielhaften Ausführungsform sind alle Wände des Verstärkungselementes aus demselben Material gebildet.

In einer beispielhaften Ausführungsform hat der Klebstoff eine Expansionsrate von weniger als 500% oder weniger als 400% oder weniger als 300%, oder ist der Klebstoff ein nicht expandierbarer Klebstoff.

Wenig expandierbare oder nicht expandierbare Materialien bieten den Vorteil, dass dadurch der Klebstoff bei der Expansion nicht zu sehr an mechanischer Stabilität verliert. Grundsätzlich wird ein Material mechanisch schwächer, je stärker das Material expandiert wird.

Beispiele für nicht oder wenig expandierbare Klebstoffe sind insbesondere SikaReinforcer^{®}-940 oder SikaPower^{®}-497. Dabei ist SikaReinforcer^{®}-940 ein Beispiel für ein expandierbares Material, wobei SikaPower^{®}-497 ein Beispiel für ein nicht expandierbares Material ist.

Der Ausdruck "nicht expandierbar" bedeutet im Zusammenhang dieser Erfindung, dass ein Material sein Volumen nicht mehr oder weniger als 10% verändert bei den für das Material vorgesehenen Prozessschritten. Beispielsweise können nicht expandierbare Klebstoffe bei einer Aushärtung leicht schrumpfen. Eine solche Volumen veränderung bei einem Aushärten wird im Sinne dieser Anmeldung als "nicht expandierbar" betrachtet.

In einer beispielhaften Ausführungsform ist der Klebstoff durch eine Temperatur von mehr als 120° härtbar.

In einer weiteren alternativen Ausführungsform umfasst das System einen ersten Klebstoff und einen zweiten Klebstoff, wobei die Klebstoffe unterschiedliche Eigenschaften, insbesondere hinsichtlich einer Expansion und/oder einer Aushärtung und/oder einer Anbindungsfähigkeit und/oder einer mechanischen Belastbarkeit, haben.

In einer beispielhaften Ausführungsform ist der Klebstoff ein Klebebandklebstoff, ein Formgedächtnisklebstoff, ein einspritzbarer Klebstoff, ein spritzgegossener Klebstoff oder ein aufextrudierter Klebstoff.

In einer beispielhaften Ausführungsform hat der Klebstoff eine Schichtdicke von 0,3 bis 7 mm, oder von 1 bis 6 mm, oder von 2 bis 5 mm.

In einer beispielhaften Ausführungsform umfasst das Verstärkungselement Rippen, welche im Wesentlichen orthogonal zu einer Längsachse des Verstärkungselementes orientiert sind und welche die erste Seitenwand und die zweite Seitenwand miteinander verbinden.

Das Vorsehen von solchen Rippen bietet den Vorteil, dass dadurch eine mechanische Belastbarkeit des Verstärkungselementes an sich weiter verbessert werden kann.

In einer beispielhaften Ausführungsform ist die erste Seitenwand im Bereich der ersten Fügestelle durch eine kontinuierliche Schicht von Klebstoff mit dem ersten Blech und mit dem zweiten Blech verklebt.

In einer beispielhaften Ausführungsform ist die zweite Seitenwand im Bereich der zweiten Fügestelle durch eine kontinuierliche Schicht von Klebstoff mit dem ersten Blech und mit dem zweiten Blech verklebt.

Das Vorsehen einer kontinuierlichen Klebstoffschicht im Bereich der Fügestellen bietet den Vorteil, dass dadurch der kritische Bereich des Strukturelementes an den Fügestellen auf ideale Art und Weise durch das Verstärkungselement verstärkt werden kann.

Das Verstärkungselement kann beispielsweise durch ein dreidimensionales Druckverfahren hergestellt werden.

Einzelheiten und Vorteile der Erfindung werden im Folgenden anhand von Ausführungsbeispielen und mit Bezug auf schematische Zeichnungen beschrieben.

Es zeigen:
- Fig. 1a: beispielhafte Darstellung einer Karosserie;
- Fig. 1b: schematische Darstellung eines Querschnittes durch ein Strukturelement der Karosserie;
- Fig. 2a und 2b: schematische Darstellung eines Systems eines verstärkten Strukturelementes gemäss Stand der Technik;
- Fig. 3a bis 4b: schematische Darstellung eines beispielhaften Systems eines verstärkten Strukturelementes; und
- Fig. 5: schematische Darstellung eines beispielhaften Verstärkungselementes.

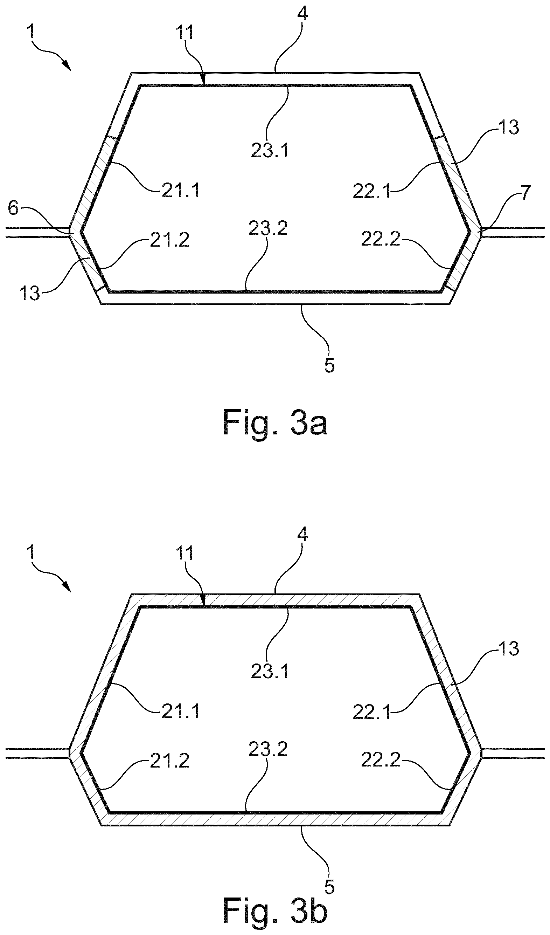

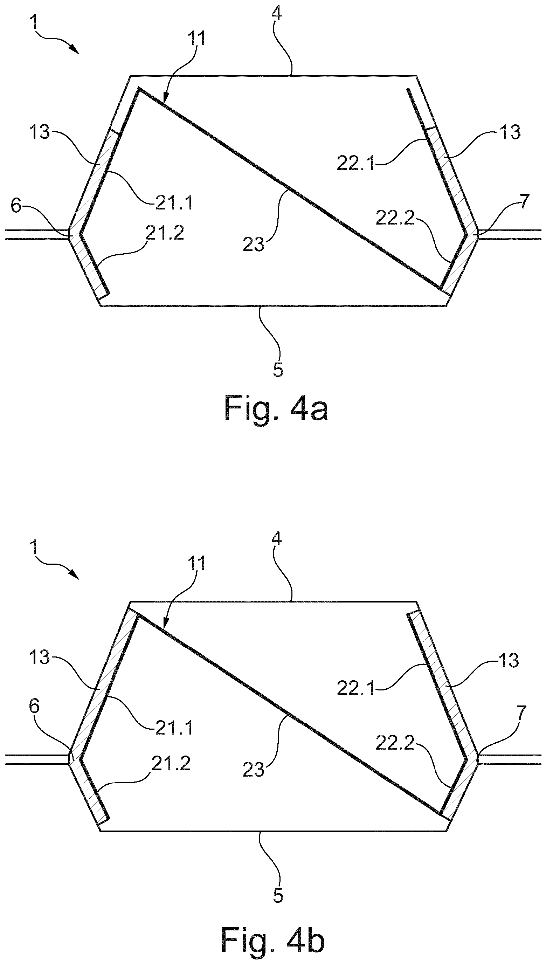

In den Fig. 3a bis 4b sind verschiedene beispielhafte Ausführungsformen eines Systems 1 eines verstärkten Strukturelementes 12, 14 dargestellt. Dabei ist in den Fig. 3a und 3b jeweils ein Verstärkungselement 11 mit einer ersten Verbindungswand 23.1 und mit einer zweiten Verbindungswand 23.2 dargestellt, und in den Fig. 4a und 4b ist jeweils ein Verstärkungselement 11 mit nur einer Verbindungswand 23 dargestellt.

Im System 1 gemäss Fig. 3a hat das Verstärkungselement 11 eine erste Seitenwand 21, welche in eine erste Teilwand 21.1 und in eine zweite Teilwand 21.2 unterteilt ist. Ebenso hat die zweite Seitenwand 22 eine erste Teilwand 22.1 und eine zweite Teilwand 22.2. Die Seitenwände 21, 22 sind nun derart mit den Blechen 4, 5 des Strukturelementes 12, 14 verklebt, dass jeweils eine Seitenwand 21, 22 mit beiden Blechen 4, 5 verklebt ist. Insbesondere ist im Bereich der Fügestellen 6, 7 Klebstoff 13 angeordnet zur Verklebung des Verstärkungselementes 11 mit dem Strukturelement 12, 14.

Das Verstärkungselement 11 umfasst weiterhin eine Verbindungswand 23, welche sich in eine erste Teilwand 23.1 und in eine zweite Teilwand 23.2 unterteilt. Dabei ist jeweils jede Teilwand 23.1, 23.2 derart angeordnet, dass sie die Seitenwände 21, 22 miteinander verbindet. In diesem Ausführungsbeispiel sind die Teilwände 23.1, 23.2 der Verbindungswand 23 nicht mit dem Strukturelement 12, 14 verklebt.

Das in Fig. 3b dargestellte System 1 unterscheidet sich vom System gemäss Fig. 3a darin, dass hier neben den Seitenwänden 21, 22 auch die Teilwände 23.1, 23.2 der Verbindungswand 23 mit den Blechen 4, 5 verklebt sind mit Klebstoff 13. In diesem Ausführungsbeispiel ist der Klebstoff 13 vollständig um das Verstärkungselement 11 angeordnet, so dass eine maximale Oberfläche des Verstärkungselementes 11 mit den Blechen 4, 5 des Strukturelementes 12, 14 verklebt ist.

In den Fig. 4a und 4b hat das Verstärkungselement 11 im Unterschied zu den Ausführungsformen gemäss den Fig. 3a und 3b jeweils nur eine Verbindungswand 23. Diese Verbindungswand 23 ist dabei derart angeordnet, dass sie im Wesentlichen diagonal im Hohlraum des Strukturelementes 12, 14 liegt. Dabei ist die Verbindungswand 23 frei von Klebstoff 13. Wiederum, analog zu den Ausführungsbeispielen gemäss den Fig. 3a und 3b, sind die Seitenwände 21, 22 bzw. deren Teilwände 21.1, 21.2, 22.1, 22.2 wiederum durch Klebstoff 13 mit den Blechen 4, 5 im Bereich der ersten Fügestelle 6 und im Bereich der zweiten Fügestelle 7 verklebt. Dabei sind die Seitenwände 21, 22 in Fig. 4a nicht vollständig mit Klebstoff 13 bedeckt, wobei gemäss Ausführungsbeispiel in Fig. 4b die Seitenwände 21, 22 vollständig mit Klebstoff 13 bedeckt und mit den Blechen 4, 5 verklebt sind.

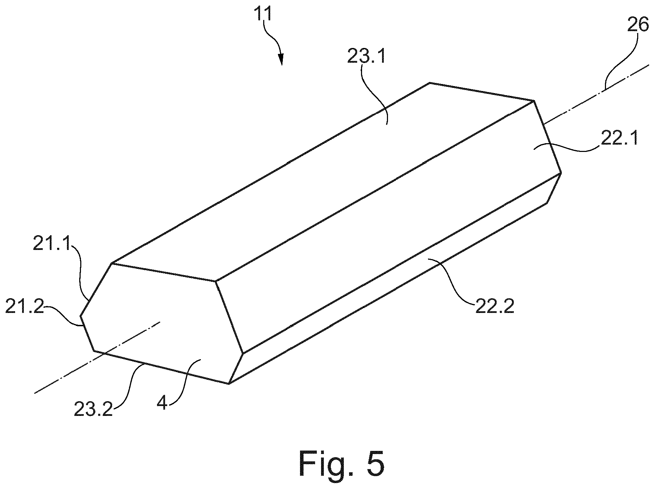

In Fig. 5 ist ein Verstärkungselement 11 in räumlicher Darstellung abgebildet. Das Verstärkungselement 11 hat dabei eine Längsachse 26, wobei das Verstärkungselement 11 so im Strukturelement angeordnet wird, dass die Längsachse 26 parallel zur Längsrichtung des Hohlraumes des Strukturelementes 12, 14 angeordnet ist.

Das Verstärkungselement 11 hat wiederum Seitenwände 21, 22 und eine Verbindungswand 23, wobei alle Wände 21, 22, 23 jeweils in Teilwände untergliedert sind. Zudem hat das Verstärkungselement 11 eine Vorder- und eine Rückwand 24.

### Bezugszeichenliste

- 1: System
- 3: Hohlraum
- 4: erstes Blech
- 5: zweites Blech
- 6: erste Fügestelle
- 7: zweite Fügestelle
- 10: Karosserie
- 11: Verstärkungselement
- 12: Strukturelement
- 13: Klebstoff
- 14: Strukturelement
- 16: Vorrichtung
- 21: erste Seitenwand
- 22: zweite Seitenwand
- 23: Verbindungswand
- 24: Vorder-/Rückwand
- 26: Längsachse

## Patentansprüche

1. System (1) eines verstärkten Strukturelementes (12, 14) eines Kraftfahrzeuges, das System (1) umfassend:
ein Strukturelement (12, 14), welches ein erstes Blech (4) und ein zweites Blech (5) umfasst, wobei die Bleche (4, 5) an einer ersten Fügestelle (6) und an einer zweiten Fügestelle (7) miteinander verbunden sind, und wobei die Bleche (4, 5) im Bereich zwischen der ersten Fügestelle (6) und der zweiten Fügestelle (7) einen länglichen Hohlraum (3) bilden;
ein Verstärkungselement (20), welches eine erste Seitenwand (21), eine zweite Seitenwand (22) und eine die Seitenwände (21, 22) verbindende Verbindungswand (23) umfasst, und welches im Hohlraum (3) des Strukturelementes (12, 14) angeordnet ist; und
Klebstoff (8), welcher das Verstärkungselement (20) mit dem Strukturelement (12, 14) verklebt;
wobei die erste Seitenwand (21) des Verstärkungselementes (20) im Bereich der ersten Fügestelle (6) angeordnet ist und die zweite Seitenwand (22) des Verstärkungselementes (20) im Bereich der zweiten Fügestelle (7) angeordnet ist, sodass die erste Seitenwand (21) mit dem ersten Blech (4) und mit dem zweiten Blech (5) verklebt ist und sodass die zweite Seitenwand (22) mit dem ersten Blech (4) und mit dem zweiten Blech (5) verklebt ist, **dadurch gekennzeichnet,**
**dass** die Verbindungswand (23) eine erste Teilwand (23.1) und eine zweite Teilwand (23.2) umfasst, wobei die erste Teilwand (23.1) und die zweite Teilwand (23.2) jeweils die erste Seitenwand (21) und die zweite Seitenwand (22) miteinander verbinden, und
**dass** die erste Teilwand (23.1) der Verbindungswand (23) zumindest teilweise mit dem ersten Blech (4) verklebt ist, und wobei die zweite Teilwand (23.2) der Verbindungswand (23) zumindest teilweise mit dem zweiten Blech (5) verklebt ist.

2. System (1) nach Anspruch 1, wobei die erste Seitenwand (21) eine erste Teilwand (21.1) und eine zweite Teilwand (21.2) umfasst, und wobei die zweite Seitenwand (22) eine erste Teilwand (22.1) und eine zweite Teilwand (22.2) umfasst, wobei die erste Teilwand (21.1) der ersten Seitenwand (21) und die erste Teilwand (22.1) der zweiten Seitenwand (22) mit dem ersten Blech (4) verklebt sind, und wobei die zweite Teilwand (21.2) der ersten Seitenwand (21) und die zweite Teilwand (22.2) der zweiten Seitenwand (22) mit dem zweiten Blech (5) verklebt sind.

3. System (1) nach einem der Ansprüche 1 oder 2, wobei das erste Blech (4) mit der ersten Seitenwand (21) und mit der zweiten Seitenwand (22) jeweils über zumindest 10 mm verklebt ist, gemessen von der ersten Fügestelle (6) bzw. von der zweiten Fügungsstelle (7) aus und orthogonal zu einer Längsachse (26) des Verstärkungselementes (11), und
wobei das zweite Blech (4) mit der ersten Seitenwand (21) und mit der zweiten Seitenwand (22) jeweils über zumindest 10 mm verklebt ist, gemessen von der ersten Fügestelle (6) bzw. von der zweiten Fügungsstelle (7) aus und orthogonal zu einer Längsachse (26) des Verstärkungselementes (11).

4. System (1) nach Anspruch 3, wobei die erste Seitenwand (21) und die zweite Seitenwand (22) jeweils über ihre gesamte Breite, gemessen orthogonal zur Längsrichtung (26) des Verstärkungselementes (11), mit dem ersten Blech (4) und dem zweiten Blech (5) verklebt sind.

5. System (1) nach einem der vorhergehenden Ansprüche, wobei die Verbindungswand (23) des Verstärkungselementes (11) zumindest teilweise frei ist von Klebstoff (13) und/oder wobei der Klebstoff (13) auf der ersten Seitenwand (21) nicht verbunden ist mit dem Klebstoff (13) auf der zweiten Seitenwand (22).

6. System (1) nach einem der vorhergehenden Ansprüche, wobei das Verstärkungselement (20) zumindest teilweise aus faserverstärktem Kunststoff oder aus Kunststoff oder aus Aluminium oder aus Magnesium aufgebaut ist.

7. System (1) nach einem der vorhergehenden Ansprüche, wobei alle Wände (21, 22, 23, 24) des Verstärkungselementes aus demselben Material gebildet sind.

8. System (1) nach einem der vorhergehenden Ansprüche, wobei der Klebstoff (8) ein nicht expandierbarer Klebstoff oder ein Klebstoff mit einer Expansionsrate von weniger als 500% ist.

9. System (1) nach einem der vorhergehenden Ansprüche, wobei der Klebstoff (8) ein Klebebandklebstoff, ein Formgedächtnisklebstoff, ein einspritzbarer Klebstoff, ein spritzgegossener Klebstoff oder ein aufextrudierter Klebstoff ist.

10. System (1) nach einem der vorhergehenden Ansprüche, wobei der Klebstoff (8) eine Schichtdicke von 0,3 bis 7 mm hat.

11. System (1) nach einem der vorhergehenden Ansprüche, wobei das Verstärkungselement (11) Rippen umfasst, welche im Wesentlichen orthogonal zu einer Längsachse (26) des Verstärkungselementes (11) orientiert sind und welche die erste Seitenwand (21) und die zweite Seitenwand (22) miteinander verbinden.

12. System (1) nach einem der vorhergehenden Ansprüche, wobei die erste Seitenwand (21) im Bereich der ersten Fügestelle (6) durch eine kontinuierliche Schicht von Klebstoff (13) mit dem ersten Blech (4) und dem zweiten Blech (5) verklebt ist, und/oder wobei die zweite Seitenwand (22) im Bereich der zweiten Fügestelle (7) durch eine kontinuierliche Schicht von Klebstoff (13) mit dem ersten Blech (4) und dem zweiten Blech (5) verklebt ist.

## Claims

1. System (1) of a reinforced structural element (12, 14) of a motor vehicle, the system (1) comprising:
a structural element (12, 14) which comprises a first panel sheet (4) and a second panel sheet (5), wherein the panel sheets (4, 5) are interconnected at a first joint (6) and at a second joint (7), and wherein the panel sheets (4, 5) form an elongate cavity (3) in the region between the first joint (6) and the second joint (7);
a reinforcing element (20) which comprises a first side wall (21), a second side wall (22), and a connecting wall (23) connecting the side walls (21, 22), and which is disposed in the cavity (3) of the structural element (12, 14); and
adhesive (8) which adhesively bonds the reinforcing element (20) to the structural element (12, 14);
wherein the first side wall (21) of the reinforcing element (20) is disposed in the region of the first joint (6), and the second side wall (22) of the reinforcing element (20) is disposed in the region of the second joint (7), such that the first side wall (21) is adhesively bonded to the first panel sheet (4) and to the second panel sheet (5), and such that the second side wall (22) is adhesively bonded to the first panel sheet (4) and to the second panel sheet (5), **characterized in that**
the connecting wall (23) comprises a first part-wall (23.1) and a second part-wall (23.2), wherein the first part-wall (23.1) and the second part-wall (23.2) interconnect in each case the first side wall (21) and
the second side wall (22); and **in that**
the first part-wall (23.1) of the connecting wall (23) is at least in part adhesively bonded to the first panel sheet (4), and wherein the second part-wall (23.2) of the connecting wall (23) is at least in part adhesively bonded to the second panel sheet (5).

2. System (1) according to Claim 1, wherein the first side wall (21) comprises a first part-wall (21.1) and a second part-wall (21.2), and wherein the second side wall (22) comprises a first part-wall (22.1) and a second part-wall (22.2), wherein the first part-wall (21.1) of the first side wall (21) and the first part-wall (22.1) of the second side wall (22) are adhesively bonded to the first panel sheet (4), and wherein the second part-wall (21.2) of the first side wall (21) and the second part-wall (22.2) of the second side wall (22) are adhesively bonded to the second panel sheet (5).

3. System (1) according to one of Claims 1 and 2, wherein the first panel sheet (4) across in each case at least 10 mm, measured from the first joint (6) or from the second joint (7), respectively, and orthogonally to a longitudinal axis (26) of the reinforcing element (11), is adhesively bonded to the first side wall (21) and to the second side wall (22); and
wherein the second panel sheet (4) across in each case at least 10 mm, measured from the first joint (6) or from the second joint (7), respectively, and orthogonally to a longitudinal axis (26) of the reinforcing element (11), is adhesively bonded to the first side wall (21) and to the second side wall (22).

4. System (1) according to Claim 3, wherein the first side wall (21) and the second side wall (22) across in each case the entire width thereof, measured orthogonally to the longitudinal direction (26) of the reinforcing element (11), are adhesively bonded to the first panel sheet (4) and the second panel sheet (5).

5. System (1) according to one of the preceding claims, wherein the connecting wall (23) of the reinforcing element (11) is at least partially free from adhesive (13) and/or wherein the adhesive (13) on the first side wall (21) is not connected to the adhesive (13) on the second side wall (22).

6. System (1) according to one of the preceding claims, wherein the reinforcing element (20) is at least partially constructed from fibre-reinforced plastic or from plastic or from aluminium or from magnesium.

7. System (1) according to one of the preceding claims, wherein all walls (21, 22, 23, 24) of the reinforcing element are formed from the same material.

8. System (1) according to one of the preceding claims, wherein the adhesive (8) is a non-expandable adhesive or an adhesive having an expansion rate of less than 500%.

9. System (1) according to one of the preceding claims, wherein the adhesive (8) is a tape adhesive, a shape memory adhesive, an injectable adhesive, an injectionmoulded adhesive or an extruded adhesive.

10. System (1) according to one of the preceding claims, wherein the adhesive (8) has a layer thickness of 0.3 to 7 mm.

11. System (1) according to one of the preceding claims, wherein the reinforcing element (11) comprises ribs which are oriented so as to be substantially orthogonal to a longitudinal axis (26) of the reinforcing element (11), and which interconnect the first side wall (21) and the second side wall (22).

12. System (1) according to one of the preceding claims, wherein the first side wall (21) in the region of the first joint (6) is adhesively bonded to the first panel sheet (4) and to the second panel sheet (5) by way of a continuous layer of adhesive (13), and/or
wherein the second side wall (22) in the region of the second joint (7) is adhesively bonded to the first panel sheet (4) and to the second panel sheet (5) by way of a continuous layer of adhesive (13).

## Revendications

1. Système (1) d'un élément structural renforcé (12, 14) d'un véhicule automobile, le système (1) comprenant :
un élément structural (12, 14), qui comprend une première tôle (4) et une deuxième tôle (5), les tôles (4, 5) étant reliées entre elles au niveau d'un premier emplacement d'assemblage (6) et au niveau d'un deuxième emplacement d'assemblage (7), et les tôles (4, 5) formant une cavité allongée (3) dans la zone entre le premier emplacement d'assemblage (6) et le deuxième emplacement d'assemblage (7) ;
un élément de renforcement (20), qui comprend une première paroi latérale (21), une deuxième paroi latérale (22) et une paroi de liaison (23) reliant les parois latérales (21, 22), et qui est agencé dans la cavité (3) de l'élément structural (12, 14) ; et
un adhésif (8), qui colle l'élément de renforcement (20) à l'élément structural (12, 14) ;
la première paroi latérale (21) de l'élément de renforcement (20) étant agencée dans la zone du premier emplacement d'assemblage (6) et la deuxième paroi latérale (22) de l'élément de renforcement (20) étant agencée dans la zone du deuxième emplacement d'assemblage (7), de telle sorte que la première paroi latérale (21) est collée à la première tôle (4) et à la deuxième tôle (5) et de telle sorte que la deuxième paroi latérale (22) est collée à la première tôle (4) et à la deuxième tôle (5), **caractérisé en ce que** la paroi de liaison (23) comprend une première paroi partielle (23.1) et une deuxième paroi partielle (23.2), la première paroi partielle (23.1) et la deuxième paroi partielle (23.2) reliant respectivement la première paroi latérale (21) et la deuxième paroi latérale (22) l'une à l'autre, et
**en ce que** la première paroi partielle (23.1) de la paroi de liaison (23) est au moins partiellement collée à la première tôle (4), et dans lequel la deuxième paroi partielle (23.2) de la paroi de liaison (23) est au moins partiellement collée à la deuxième tôle (5).

2. Système (1) selon la revendication 1, dans lequel la première paroi latérale (21) comprend une première paroi partielle (21.1) et une deuxième paroi partielle (21.2), et dans lequel la deuxième paroi latérale (22) comprend une première paroi partielle (22.1) et une deuxième paroi partielle (22.2), dans lequel la première paroi partielle (21.1) de la première paroi latérale (21) et la première paroi partielle (22.1) de la deuxième paroi latérale (22) sont collées à la première tôle (4), et dans lequel la deuxième paroi partielle (21.2) de la première paroi latérale (21) et la deuxième paroi partielle (22.2) de la deuxième paroi latérale (22) sont collées à la deuxième tôle (5).

3. Système (1) selon l'une quelconque des revendications 1 ou 2, dans lequel la première tôle (4) est collée à la première paroi latérale (21) et à la deuxième paroi latérale (22), respectivement, sur au moins 10 mm, tel que mesuré à partir du premier emplacement d'assemblage (6) ou du deuxième emplacement d'assemblage (7) et orthogonalement à un axe longitudinal (26) de l'élément de renforcement (11), et dans lequel la deuxième tôle (4) est collée à la première paroi latérale (21) et à la deuxième paroi latérale (22), respectivement, sur au moins 10 mm, tel que mesuré à partir du premier emplacement d'assemblage (6) ou du deuxième emplacement d'assemblage (7) et orthogonalement à un axe longitudinal (26) de l'élément de renforcement (11).

4. Système (1) selon la revendication 3, dans lequel la première paroi latérale (21) et la deuxième paroi latérale (22) sont collées respectivement à la première tôle (4) et à la deuxième tôle (5) sur toute leur largeur, tel que mesuré orthogonalement à la direction longitudinale (26) de l'élément de renforcement (11).

5. Système (1) selon l'une quelconque des revendications précédentes, dans lequel la paroi de liaison (23) de l'élément de renforcement (11) est au moins partiellement exempte d'adhésif (13) et/ou dans lequel l'adhésif (13) sur la première paroi latérale (21) n'est pas relié à l'adhésif (13) sur la deuxième paroi latérale (22).

6. Système (1) selon l'une quelconque des revendications précédentes, dans lequel l'élément de renforcement (20) est construit au moins partiellement à partir de matière plastique renforcée par des fibres ou à partir de matière plastique ou à partir d'aluminium ou à partir de magnésium.

7. Système (1) selon l'une quelconque des revendications précédentes, dans lequel toutes les parois (21, 22, 23, 24) de l'élément de renforcement sont formées à partir du même matériau.

8. Système (1) selon l'une quelconque des revendications précédentes, dans lequel l'adhésif (8) est un adhésif non expansible ou un adhésif ayant un taux d'expansion inférieur à 500 %.

9. Système (1) selon l'une quelconque des revendications précédentes, dans lequel l'adhésif (8) est un adhésif en bande adhésive, un adhésif à mémoire de forme, un adhésif injectable, un adhésif moulé par injection ou un adhésif extrudé.

10. Système (1) selon l'une quelconque des revendications précédentes, dans lequel l'adhésif (8) a une épaisseur de couche de 0,3 à 7 mm.

11. Système (1) selon l'une quelconque des revendications précédentes, dans lequel l'élément de renforcement (11) comprend des nervures, qui sont orientées essentiellement orthogonalement à un axe longitudinal (26) de l'élément de renforcement (11) et qui relient la première paroi latérale (21) et la deuxième paroi latérale (22) l'une à l'autre.

12. Système (1) selon l'une quelconque des revendications précédentes, dans lequel la première paroi latérale (21) est collée à la première tôle (4) et à la deuxième tôle (5) dans la zone du premier emplacement d'assemblage (6) par une couche continue d'adhésif (13), et/ou dans lequel la deuxième paroi latérale (22) est collée à la première tôle (4) et à la deuxième tôle (5) dans la zone du deuxième emplacement d'assemblage (7) par une couche continue d'adhésif (13) .
